# EUROPEAN PATENT APPLICATION

(11) **EP 4 851 868 A1**
(43) Date of publication of application: **09.12.2026**
(21) Application number: 26182839.6
(22) Date of filing: 03.06.2026
(51) Int. Cl.: G06N 3/096, G06N 3/0475

(54) **METHOD, APPARATUS, DEVICE, STORAGE MEDIUM AND PROGRAM PRODUCT FOR MODEL UPDATING**

(30) Priority: 03.06.2025 CN 202510737095
(71) Applicant: Bytedance Technology Ltd., KY1 - 1205 Grand Cayman Cayman Islands (KY)
(72) Inventor: Guo, Ruoyu, Beijing, 100028 (CN); Bai, Ge, Beijing, 100028 (CN)
(74) Representative: Marks & Clerk LLP

(57) **Abstract**

The disclosure relates to model updating. A method includes: updating a student model based on a difference between first visual content output from a teacher model and second visual content output from the student model, where the teacher model is configured to generate the first visual content based on positive prompt information, negative prompt information and a guidance scale, and the student model is configured to generate the second visual content based on the positive prompt information; generating, based on evaluation prompt information during an updating process of the student model, evaluation visual content corresponding to the evaluation prompt information by using the teacher model; updating the guidance scale of the teacher model in response to a quality level of the evaluation visual content being lower than a first threshold quality; and performing, based on the updated guidance scale, updating of the student model by using the teacher model.

## Description

### FIELD

Example embodiments of the present disclosure generally relate to the field of computers, and in particular, to a method, an apparatus, an electronic device, a computer-readable storage medium, and a computer program product for model updating.

### BACKGROUND

With the development of machine learning techniques, it has been possible to use machine learning models to perform tasks in various application environments. For example, a trained machine learning model may be used to perform a content generation task, where the content may be any appropriate content such as a video, an image, a text, etc. In order to meet increasing task requirements, machine learning models are constructed to have more and more complex structures and an increasing number of parameters to support requirements on complex tasks.

### SUMMARY

In a first aspect of the present disclosure, a method for model updating is provided. The method includes: updating a student model based on a difference between first visual content output from a teacher model and second visual content output from the student model, where the teacher model is configured to generate the first visual content based on positive prompt information, negative prompt information, and a guidance scale, the guidance scale indicating respective influence degrees of the positive prompt information and the negative prompt information on the first visual content, and the student model is configured to generate the second visual content based on the positive prompt information; generating, based on evaluation prompt information during an updating process of the student model, evaluation visual content corresponding to the evaluation prompt information by using the teacher model; updating the guidance scale of the teacher model, in response to a quality level of the evaluation visual content being lower than a first threshold quality; and performing, based on the updated guidance scale, updating of the student model by using the teacher model.

In a second aspect of the present disclosure, an apparatus for model updating is provided. The apparatus includes: a student model updating module configured to update a student model based on a difference between first visual content output from a teacher model and second visual content output from the student model, where the teacher model is configured to generate the first visual content based on positive prompt information, negative prompt information, and a guidance scale, the guidance scale indicating respective influence degrees of the positive prompt information and the negative prompt information on the first visual content, and the student model is configured to generate the second visual content based on the positive prompt information; an evaluation content generating module configured to generate, based on evaluation prompt information during an updating process of the student model, evaluation visual content corresponding to the evaluation prompt information by using the teacher model; a guidance scale updating module configured to update the guidance scale of the teacher model, in response to a quality level of the evaluation visual content being lower than a first threshold quality; and an updating executing module configured to perform, based on the updated guidance scale, updating of the student model by using the teacher model.

In a third aspect of the present disclosure, an electronic device is provided. The device includes at least one processor; and at least one memory coupled to the at least one processor and storing instructions executable by the at least one processor. The instructions, when executed by the at least one processor, cause the electronic device to perform the method of the first aspect.

In a fourth aspect of the present disclosure, a computer-readable storage medium is provided. The computer-readable storage medium stores thereon computer-executable instructions which, when executed by a processor, implement the method of the first aspect.

In a fifth aspect of the present disclosure, a computer program product is provided. The computer program product includes computer-executable instructions which, when executed by a processor, implement the method of the first aspect.

It is to be appreciated that the content described in this summary section of the present disclosure is neither intended to identify key or essential features of the embodiments of the present disclosure, nor is it intended to limit the scope of the present disclosure. Other features of the present disclosure is to be readily envisaged through the following description.

### BRIEF DESCRIPTION OF THE DRAWINGS

The above and other features, advantages and aspects of the embodiments of the present disclosure may become more apparent from the following detailed description taken in conjunction with the accompanying drawings. In the drawings, the same or similar reference numbers refer to the same or similar elements, where:
FIG. 1 illustrates a schematic diagram of an example environment in which the embodiments of the present disclosure may be implemented;
FIG. 2 illustrates an example architecture for model updating according to some embodiments of the present disclosure;
FIG. 3 illustrates an example process for updating a guidance scale according to some embodiments of the present disclosure;
FIG. 4 illustrates a flowchart of a method for model updating according to some embodiments of the present disclosure;
FIG. 5 illustrates an illustrative structural block diagram of an apparatus for model updating according to some embodiments of the present disclosure; and
FIG. 6 illustrates a block diagram of an electronic device in which one or more embodiments of the present disclosure may be implemented.

### DETAILED DESCRIPTION

The embodiments of the present disclosure may described in more detail below with reference to the accompanying drawings. Although certain embodiments of the present disclosure are shown in the accompanying drawings, it is to be appreciated that the present disclosure may be implemented in various forms and is to not be construed as being limited to the embodiments set forth herein. Instead, these embodiments are provided for a more thorough and complete understanding of the present disclosure. It is to be appreciated that the drawings and embodiments of the present disclosure are only for illustrative purposes and are not intended to limit the scope of the present disclosure.

In the description of the embodiments of the present disclosure, the term "including" and so on is to be understood as open-ended inclusions, that is, "including but not limited to". The term "based on" is to be understood as "based at least in part on". The term "one embodiment" or "the embodiment" is to be understood as "at least one embodiment". The term "some embodiments" is to be understood as "at least some embodiments". The terms "first", "second", etc. may refer to different or same objects. Other definitions, either explicit or implicit, may also be included below.

Herein, unless explicitly stated, performing a step "in response to A" does not mean that the step is performed immediately after "A", but may include one or more intermediate steps.

It may be understood that the data involved in the technical solution (including but not limited to the data itself, obtain, use, storage or deletion of the data) is to comply with requirements of corresponding laws, regulations, and related provisions.

It may be understood that before using the technical solutions disclosed in the embodiments of the present disclosure, the user is to be informed of the type, range of use, use scenarios, etc. of personal information involved in the present disclosure in an appropriate manner and the authorization of the user is to be obtained according to relevant laws and regulations.

For example, in response to receiving an active request from the user, prompt information is sent to the user to clearly prompt the user that the requested operation is to require access to and use of the user's personal information, so that the user may independently choose whether to provide the personal information to software or hardware, such as an electronic device, an application, a server or a storage medium, that performs the operations of the technical solutions of the present disclosure based on the prompt information.

As an optional but non-limited implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative, and does not suggest limitations on the implementations of the present disclosure. Other manners that satisfy the relevant laws and regulations may also be applied in the implementations of the present disclosure.

As used herein, the term "model" may learn a correlation between corresponding inputs and outputs from the training data, so that a corresponding output may be generated for a given input after the training is completed. The generation of the model may be based on machine learning techniques. Deep learning is a machine learning algorithm that uses multiple layers of processing units to process inputs and provide corresponding outputs. A neural network model is an example of a model based on deep learning. Herein, a "model" may also be referred to as a "machine learning model", a "learning model", a "machine learning network" or a "learning network", which terms are used interchangeably herein.

A "neural network" is a machine learning network based on deep learning. A neural network may process an input and provide a corresponding output, and generally includes an input layer and an output layer, and one or more hidden layers between the input layer and the output layer. Neural networks used in deep learning applications typically include many hidden layers, thereby increasing the depth of the network. The layers of the neural network are connected in sequence, so that an output of a previous layer is provided as an input of a next layer, where the input layer receives the input of the neural network, and an output of the output layer serves as a final output of the neural network. Each layer of the neural network includes one or more nodes (also referred to as processing nodes or neurons), and each node processes an input from the previous layer.

Generally, machine learning may roughly include three phases, namely, a training phase, a testing phase, and an application phase (also referred to as an inference phase). In the training phase, a given model may be trained using a large amount of training data, and parameters of the model may be iteratively updated until the model may obtain consistent inferences from the training data that meet an expected goal. Through training, the model may be considered to be able to learn a correlation (also referred to as a mapping from input to output) from input to output from the training data. Parameter values of the trained model are determined. In the testing phase, a test input is applied to the trained model to test whether the model may provide a correct output, thereby determining performance of the model. The testing phase may sometimes be incorporated into the training phase. In the application or inference phase, the trained model may be used to process an actual model input and determine a corresponding model output based on the parameter values obtained through training.

A diffusion model, also referred to as a diffusion probabilistic model, is a class of generative models whose data generation process is based on a pair of Markov processes, namely, a forward diffusion process and a backward denoising process. The forward diffusion process (expressed as: $q \left({x}^{\left(1:T\right)}\left|{x}^{\left(0\right)}\right.\right) = {\prod }_{t = 1}^{T} q \left({x}^{\left(t\right)}\left|{x}^{\left(t-1\right)}\right.\right)$) involves gradually interfering with data x ⁽⁰⁾ ~ q (x ⁽⁰⁾), and obtaining a static noise distribution x^{(T)}~ qₙₒᵢₛₑ through T gradual noise adding steps x ^{(1:T)} = x₁ , ··· , x ^{(t-1)} , x ^{(t)} , ··· , x ^{(T)}. Through model training, the learned backward denoising process (expressed as: ${p}_{θ} \left({x}^{\left(0:T\right)}\right) = p \left({x}^{\left(t\right)}\right) {\prod }_{t = 1}^{T} {p}_{θ} \left({x}^{\left(t-1\right)}\left|{x}^{\left(t\right)}\right.\right)$) performs an opposite process of gradually denoising a sample toward a data distribution to obtain the data x ⁽⁰⁾ ~ q (x ⁽⁰⁾ ). It may be seen that the backward denoising process may correspond to a desired data modeling process, and desired data is finally obtained.

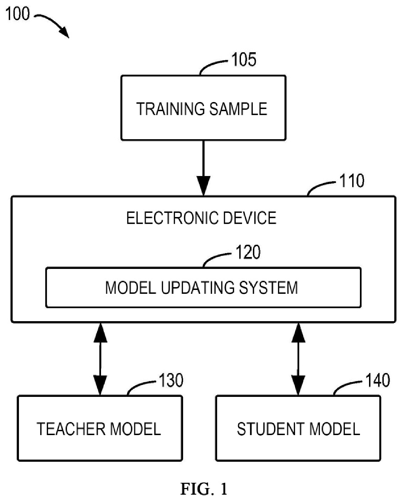

FIG. 1 illustrates a schematic diagram of an example environment 100 in which the embodiments of the present disclosure may be implemented. In the example environment 100, a model updating system 120 may be deployed in an electronic device 110. The model updating system 120 may also be referred to as a model distillation system. Model distillation is a technology for transferring knowledge on a complex model (which may also be referred to as a teacher model) to a simple model (which may also be referred to as a student model). A core goal of the model distillation is to significantly reduce computational complexity and storage requirements of the model while maintaining model performance.

The model updating system 120 may use a training sample 105 to perform model distillation on a teacher model 130 and a student model 140, for example. The teacher model 130 is usually a large and complex model with high accuracy and generalization performance, while the student model 140 is a smaller and simpler model with lower computing and storage costs. The teacher model 130 and the student model 140 may be used to perform a same task. As an example, the teacher model 130 and the student model 140 may both be configured to perform a visual generation task. In the visual generation task, a model input may include a text, an image, and/or a video, and a model output is visual content generated based on the model input. The visual content includes an image or a video. Both the teacher model 130 and the student model 140 may be based on any appropriate model structure, including but not limited to a Transformer model, a convolutional neural network (CNN), a recurrent neural network (RNN), a deep neural network (DNN), and so on. In some embodiments, the teacher model 130 and the student model 140 may both be implemented based on a diffusion model.

In the training phase, a machine learning model based on a diffusion model may complete training of the machine learning model by continuously performing noise addition processing on known data and predicting added noise. In the application phase, the machine learning model based on the diffusion model may continuously perform noise addition processing on a model input to determine noise corresponding to the model input, and then continuously perform a denoising process on the noise to obtain a model output corresponding to the model input. For example, during video generation, the machine learning model based on the diffusion model may continuously perform a denoising process from random noise under a specific condition constraint, so that a video that meets a condition may be generated.

For example, the model updating system 120 may use the teacher model 130 and the student model 140 to process the training sample 105, respectively, and obtain respective model outputs of the teacher model 130 and the student model 140. For example, the model updating system 120 may update the student model 140 based on a difference between the model output of the teacher model 130 and the model output of the student model 140.

The electronic device 110 may be any type of device having a computing capability, including a terminal device or a server device. The terminal device may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including fittings and peripherals of these devices or any combination thereof.

The server device may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server device may include, for example, a computing system/server, such as a mainframe, an edge computing node, a computing device in a cloud environment, and so on.

It is to be appreciated that the structures and functions of the elements in the environment 100 are described for purposes of illustration only, without suggesting any limitation to the scope of the present disclosure.

In order to further improve model capability, it has also been proposed to use a classifier-free guidance (CFG) technique to improve the generation effect of a machine learning model. A core of the CFG technique is to use a model to determine a positive output corresponding to positive prompt information and a negative output corresponding to negative prompt information, respectively, and determine a final model output based on a guidance scale, the positive output and the negative output. The positive prompt information may guide the model to generate content matching the positive prompt, while the negative prompt information may guide the model to avoid generating content related to the negative prompt. In addition, the guidance scale used may be used to control respective influence degrees of the positive prompt information and the negative prompt information on the model output. The model output generated by the CFG technique has higher quality than the model output obtained directly based on single prompt information (for example, only the positive prompt information), which may effectively improve the quality of the model output and improve task execution capability of the model.

However, the model using the CFG technique needs to determine corresponding outputs for two pieces of prompt information, respectively, and needs to calculate the two outputs based on the guidance scale to determine the final model output. This leads to more inference steps and longer inference time of the model, which affects efficiency of the model in task execution. In addition, as mentioned above, in order to meet increasing task requirements, machine learning models are constructed to have more and more complex structures and an increasing number of parameters to support requirements on complex tasks. In the case that the model itself has large parameters and a complex structure, using the CFG technique will further affect the efficiency of the model, and a model distillation technique is needed to help the model speed up.

In order to save graphics memory, a weighted average (for example, exponential moving average (EMA)) model of the student model is generally used as the teacher model, which is distilled in combination with CFG, that is, the student model is allowed to learn a CFG inference result of the teacher model. In model distillation, EMA is a commonly used parameter update technique. The EMA may be regarded as a calculation method for smoothing model parameters. It does not simply use a current gradient to update model parameters like traditional optimization algorithms such as stochastic gradient descent (SGD). In the model distillation scenario, for the student model, the EMA calculates an update value of a current parameter by combining parameter value information of a previous update step. Using the EMA may make the parameter update of the student model more stable. During the distillation process, the student model needs to continuously adjust its parameters to be close to the output of the teacher model. If the parameter update is too drastic, the learning process of the student model may be unstable, resulting in phenomena such as oscillations. The EMA enables the student model to more smoothly learn knowledge of the teacher model through smooth updating, and reduces training instability caused by too drastic parameter updating.

By performing model distillation based on CFG inference, it may ensure high inference efficiency of the student model, for example, the learning model may only perform inference based on a positive prompt without performing inference based on a negative prompt, while achieving a better generation effect brought about by CFG inference. In such a model distillation process, with the introduction of the CFG technique, guidance scales of the student model and the teacher model are often initially set to a same value. As the number of iterations of model training increases, the guidance scale of the student model during inference needs to gradually reduce an influence of the negative prompt on the model output, so as to avoid quality problems of generation results such as oversaturation. However, during the model distillation process, because the teacher model is determined by the student model through the EMA, the teacher model also often needs to gradually reduce an influence of the negative prompt information on the model output of the teacher model, so as to ensure the quality of the model output of the teacher model. This means that if the guidance scale of the teacher model is not changed, it may not be possible to ensure that the output of the teacher model is always sufficient to meet an expectation, thereby being sufficient to guide parameter updating of the student model.

In view of this, according to the embodiments of the present disclosure, an improved solution for model updating is provided, in which the guidance scale of CFG of the teacher model is updated to ensure the quality of the model output from the teacher model. This may help improve the effectiveness of model distillation. According to the solution of the embodiments of the present disclosure, the student model is updated based on a difference between first visual content output from the teacher model and second visual content output from the student model. The teacher model is configured to generate the first visual content based on positive prompt information, negative prompt information, and a guidance scale. The guidance scale indicates respective influence degrees of the positive prompt information and the negative prompt information on the first visual content. The student model is configured to generate the second visual content based on the positive prompt information. During an updating process of the student model, based on evaluation prompt information, evaluation visual content corresponding to the evaluation prompt information is generated by using the teacher model. The guidance scale of the teacher model is updated in response to a quality level of the evaluation visual content being lower than a first threshold quality. Based on the updated guidance scale, the updating of the student model is performed by using the teacher model.

In this way, during the updating process of the student model, the guidance scale of the teacher model introduced with CFG may be dynamically adjusted to dynamically adjust the influence of the negative prompt information on the visual content output from the teacher model. This may avoid a problem that the quality of the visual content output from the teacher model declines as the number of iterations of model distillation increases. This may ensure the quality of the model output of the teacher model, and help improve the updating effect of the student model.

Some example embodiments of the present disclosure will be described below with continued reference to the drawings. The method for model updating involved in the present disclosure may be implemented at the electronic device 110, and specifically may be implemented at the model updating system 120. In the present disclosure, an example description is provided in which the teacher model 130 and the student model 140 are used to perform a visual content generation task (that is, the model outputs of both the teacher model 130 and the student model 140 are visual content). The visual content includes an image and/or a video.

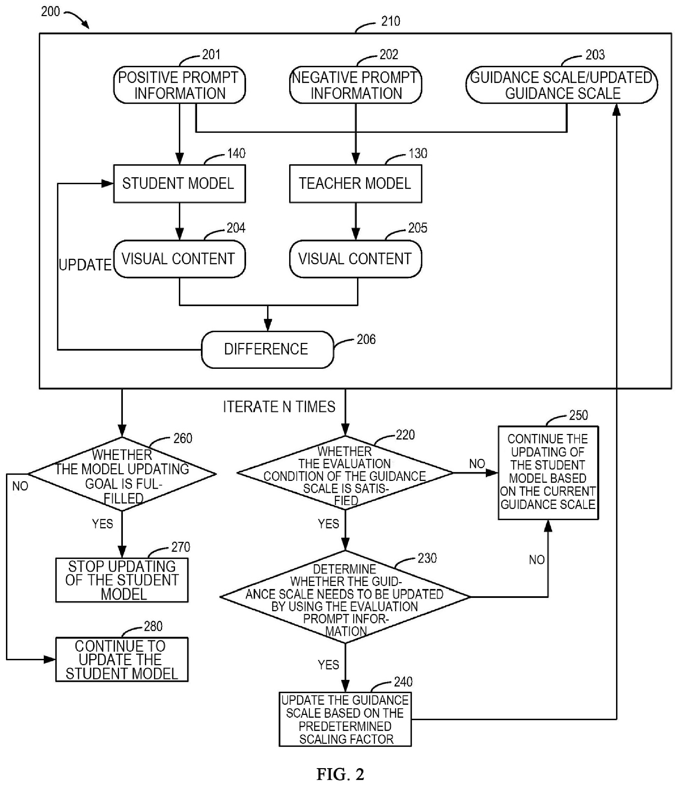

FIG. 2 illustrates an example architecture 200 for model updating according to some embodiments of the present disclosure. The example architecture 200 may be implemented at the model updating system 120. A block 210 in the example architecture 200 illustrates an example process of performing one model updating (which may be referred to as performing one model iteration) on the student model 140. The teacher model 130 is configured to generate visual content 205 (which may be referred to as first visual content, for example) based on positive prompt information 201, negative prompt information 202, and a guidance scale 203. The guidance scale 203 indicates respective influence degrees of the positive prompt information 201 and the negative prompt information 202 on the visual content 205. As an example, the teacher model 130 may generate the visual content 205 based on the following formula: ${t}_{i} = scale \times {{t}_{i}}^{c} - \left(scale-1\right) \times {{t}_{i}}^{uc}$ (1) where tᵢ, tᵢ^{c}, and tᵢ^{uc} respectively represent, for *i*^{th} positive prompt information, a final model output (that is, the visual content 205) of the teacher model 130, a positive output determined based on the positive prompt information 201, and a negative output determined based on the negative prompt information 202, and *scale* indicates the guidance scale 203. In formula (1), a smaller guidance scale *scale* means a smaller influence of the negative prompt information on the model output. When the guidance scale *scale* equals to 1, it means that the negative prompt has no influence on the model output, that is, the model does not need to perform inference based on the negative prompt. It is to be understood that formula (1) is only an example, and the CFG technique used by the teacher model 130 may actually be expressed based on other appropriate formulas. For example, the formula may be designed such that a greater value of scale leads to a higher influence of the negative prompt on the model output.

In an initial phase of model distillation, the student model 140 is configured to be the same as the teacher model 130. A goal of the model distillation is to enable the student model 140 to generate visual content 204 (which may be referred to as second visual content, for example) based only on the positive prompt information 201. For example, in the CFG inference based on formula (1), the guidance scale *scale* used by the student model 140 equals to 1.

During the process of the model distillation, the model updating system 120 may update the student model 140 based on a difference 206 between the visual content 205 output from the teacher model 130 and the visual content 204 output from the student model 140. The model updating system 120 may use any appropriate loss function such as mean squared error (MSE), cross-entropy loss, and categorical cross-entropy loss to calculate the difference 206 between the visual content 205 and the visual content 204. For example, in a process of performing inference based on MSE loss, the loss function may be expressed as Ls=MSE(si,ti), where si represents a model output of the student model 140 for the *i*^{th} positive prompt information. It is to be understood that the present disclosure does not limit the loss function for model distillation. A final goal of model updating is to reduce the difference 206 as much as possible.

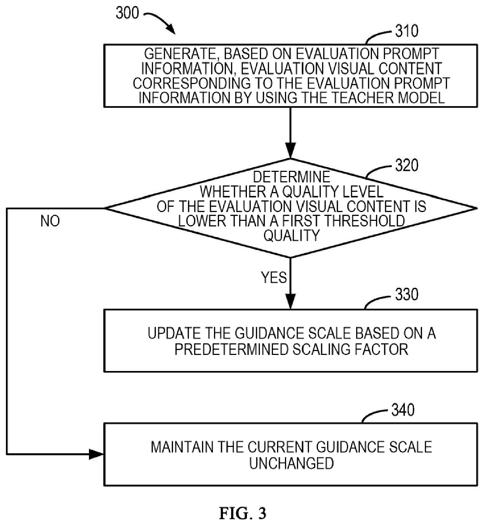

The model updating system 120 may perform a plurality of updates (or may be referred to as a plurality of iterations) on the student model 140 by repeatedly performing the example process shown in the block 201. It is to be understood that different updating in the plurality of updating use different positive prompt information and negative prompt information. Each time the example process shown in the block 201 is performed, the model updating system 120 may determine (230) whether the guidance scale 203 needs to be updated by using the evaluation prompt information. A detailed process of determining whether the guidance scale 203 needs to be updated by using the evaluation prompt information will be described in detail below with reference to FIG. 3, and details are not described herein. In some embodiments, in order to reduce the amount of computation, the model system 120 may also determine (220) whether an evaluation condition of the guidance scale 203 is satisfied each time the example process shown in the block 201 is performed, and then determine whether the guidance scale 203 needs to be updated when it is determined that the evaluation condition is satisfied.

The evaluation condition may indicate that the number of times the student model 140 is updated reaches a predetermined interval for the number of times, that is, whether the guidance scale 203 needs to be updated is determined at intervals of a certain number of times. For example, if a current number of times of updating is *i*^{th} and the predetermined interval for the number of times is Interval Interᵥₐₗ, in a case where i may be divided by Interval (for example, i%Interᵥₐₗ==0), it means that after Interval updates, it is necessary to re-evaluate whether the guidance scale 203 needs to be updated. In this case, the model updating system 120 may determine that the evaluation condition is satisfied in response to the number of times the student model 140 is updated reaching the predetermined interval for the number of times. For example, if the predetermined interval for the number of times is 50, the model updating system 120 may determine that the evaluation condition is satisfied in response to the number of times the student model 140 is updated reaching 50.

The evaluation condition may indicate that the content quality of the visual content 204 output from the updated student model 140 reaches a threshold quality (which may be referred to as a second threshold quality, for example). That is, in this case, the model updating system 120 may determine that the evaluation condition is satisfied in response to the quality of the visual content 204 output from the student model 140 being high. In some embodiments, the second threshold quality may include a plurality of different thresholds, and the model updating system 120 may determine that the evaluation condition is satisfied and perform one time of evaluation on the guidance scale 203 each time the visual content output from the student model 140 reaches one threshold. For example, the second threshold quality may include 50, and the quality of the visual content 204 output from the student model 140 may be scored, and the evaluation condition is determined to be satisfied in response to the score of the visual content 204 reaching 50.

The model updating system 120 may perform a block 250 in response to the evaluation condition not being satisfied. At the block 250, the model updating system 120 may continue to update the student model 140 based on the current guidance scale 203. For example, if N times of updating have been performed on the student model 140, in this case, the model updating system 120 may maintain the current guidance scale, and perform the (N+1)^{th} model update on the student model 140 based on the guidance scale. In response to the evaluation condition being satisfied, the model updating system 120 may determine (230) whether the guidance scale 203 needs to be updated by using the evaluation prompt information. The model updating system 120 may perform the block 250 in response to determining that the guidance scale 203 is not to be updated.

In some embodiments, the model updating system 120 may also determine whether the guidance scale of the teacher model 130 needs to be updated in each round of updating to the student model 140, or the model updating system 120 may determine whether the guidance scale of the teacher model 130 needs to be updated based on other update conditions. The embodiments of the present disclosure are not limited in this regard.

The model updating system 120 may update the guidance scale 203 in any appropriate manner in response to determining that the guidance scale 203 needs to be updated. In some embodiments, an influence degree of the negative prompt information 202 indicated by the updated guidance scale 203 on the visual content 205 output from the teacher model 130 needs to be lower than an influence degree of the negative prompt information 202 indicated by the guidance scale 203 before the updating on the visual content 205. In some embodiments, the model updating system 120 may update (240) the guidance scale 203 based on a predetermined scaling factor to obtain a first guidance scale. For example, if the predetermined scaling factor is represented by *ratio,* the model updating system 120 may determine that the updated guidance scale 203 is *ratio***scale.*

A value of the predetermined scaling factor is associated with the formula used by the teacher model 130. For example, if the teacher model 130 determines the model output based on the above formula (1), and the influence degree of the negative prompt information 202 on the visual content 205 decreases as the guidance scale 203 decreases, the predetermined scaling factor is to be a positive number less than 1 (that is, the predetermined scaling factor is between (0, 1)). If the teacher model 130 determines the model output based on another formula, and the influence degree of the negative prompt information 202 on the visual content 205 decreases as the guidance scale 203 increases, the predetermined scaling factor is to be a positive number greater than 1.

For example, the model updating system 120 may directly determine the first guidance scale to be the updated guidance scale 203. In some embodiments, the model updating system 120 may select the updated guidance scale from the first guidance scale and the predetermined guidance scale based on a comparison between the first guidance scale and the predetermined guidance scale. For example, if the teacher model 130 determines the model output based on the above formula (1) and the predetermined guidance scale is 1, the model updating system 120 may determine a larger value of the first guidance scale and 1 as the updated guidance scale 203. That is, the updated guidance scale 203 is max(1, *ratio***scale*). It is to be understood that if the teacher model 130 determines the model output based on another formula, the model updating system 120 may possibly determine a smaller value of the first guidance scale and the predetermined guidance scale as the updated guidance scale.

In some embodiments, a training goal of the student model 140 may be determined based on the predetermined guidance scale. Still using an example in which the teacher model 130 determines the model output based on the above formula (1) and the predetermined guidance scale is 1, the training goal of the student model 140 may be to be trained to perform CFG inference with a guidance scale of 1, that is, to achieve the same effect as the teacher model 140 by performing inference based only on the positive prompt information without considering the negative prompt information.

After the guidance scale 203 is updated, the model updating system 120 may perform, based on the updated guidance scale 203, updating of the student model 140 by using the teacher model 130. For example, if the student model 140 has been updated N times, in this case, the model updating system 120 may perform the (N+1)^{th} model update on the student model 140 based on the updated guidance scale 203.

In some embodiments, the model updating system 120 may also determine (260) whether a model update goal corresponding to the student model 140 is fulfilled each time the example process shown in the block 201 is performed. The model updating goal may be, for example, based on the number of times the student model 140 is updated reaching a predetermined number of times (for example, reaching a maximum number of iterations *S*ₘₐₓ). For example, if the predetermined number of times is 500, the model updating system 120 may also determine that the model updating goal is fulfilled in response to the number of times the student model 140 is updated reaching 500. The model updating goal may be, for example, based on the content quality of the visual content output from the updated student model 140 reaching a threshold quality (which may be referred to as a third threshold quality, for example). That is, the model updating system 120 may determine that the model updating goal is fulfilled in response to the content quality of the visual content output from the updated student model 140 being high. Currently, the model updating goal may be further based on any other appropriate content, which is not limited in the present disclosure.

In response to the model updating goal being fulfilled, the model updating system 120 may stop (270) the updating of the student model 140. At this time, it may be considered that the model distillation process of the learning model 140 has been completed. It is to be understood that in the case where the model updating goal is fulfilled, the model updating system 120 no longer needs to determine whether the evaluation condition is satisfied, determine whether the guidance scale needs to be updated, and so on, and the model updating system 120 no longer needs to update the guidance scale. The model updating system 120 may continue (280) the updating of the student model 140 in response to the model updating goal not being fulfilled. For example, the model updating system 120 may determine whether the evaluation condition is satisfied, determine whether the guidance scale needs to be updated, and so on, in response to the model updating goal not being fulfilled.

FIG. 3 illustrates an example process 300 of updating a guidance scale according to some embodiments of the present disclosure.

At a block 310, the model updating system 120 generates, based on evaluation prompt information, evaluation visual content corresponding to the evaluation prompt information, by using the teacher model. In an example in which the above positive prompt information and negative prompt information come from a certain training sample set, the evaluation prompt information may come from another evaluation sample set. The evaluation sample set may include a plurality of pieces of evaluation prompt information and label visual content corresponding to each of the plurality of pieces of evaluation prompt information.

At a block 320, the model updating system 120 may determine whether a quality level of the evaluation visual content is lower than a first threshold quality. The model updating system 120 may determine the quality level of the evaluation visual content in any appropriate manner. For example, the model updating system 120 may determine the quality level of the evaluation visual content based on a predetermined rule or algorithm, or using a specific evaluation model. In some embodiments, because the guidance scale may affect saturation, content diversity, content generation efficiency, fineness, aesthetic quality, and the like of the visual content generated by the model, the model updating system 120 may determine the quality level of the evaluation visual content based on one or more of a saturation score of the evaluation visual content, a content diversity score of the evaluation visual content, a content generation efficiency score of the evaluation visual content, a fineness score of the evaluation visual content, and an aesthetic quality score of the evaluation visual content. The saturation score, the content diversity score, the content generation efficiency score, and the like herein may be determined by using a specific scoring model, for example.

It is to be noted that in some embodiments, according to formula (1), the influence of the guidance scale on the content generation efficiency of the visual content is only related to whether a value of the guidance scale is greater than 1 (because the negative prompt information no longer needs to be considered when the guidance scale is equal to 1). When the guidance scale is 1, the content generation efficiency score may be a relatively high value. When the guidance scale is greater than 1, regardless of how large the guidance scale is (for example, 3 or 5), the content generation efficiency score may be a fixed and relatively small value. For example, the content generation efficiency score when the guidance scale is 1 may be twice the content generation efficiency score when the guidance scale is greater than 1. Certainly, in actual applications, the influence of the guidance scale on the content generation efficiency may also be affected by the model itself, hardware, and other aspects. In this case, when the guidance scale is greater than 1, the content generation efficiency score may be appropriately reduced as the guidance scale increases.

For example, the model updating system 120 may determine that the quality level of the evaluation visual content is high in response to the saturation score, the content diversity score, the content generation efficiency score, the fineness score, the similarity score, the aesthetic quality score, and the like corresponding to the evaluation visual content being within respective predetermined ranges. For example, if the saturation score corresponding to the evaluation visual content is too high or too low, it means that there is a problem of oversaturation or undersaturation, and the quality level of the evaluation visual content is low; otherwise, the quality level of the evaluation visual content is high. For another example, a higher similarity score with the label visual content (for example, higher than 90) indicates a higher quality level of the evaluation visual content.

It is to be noted that in actual applications, the quality level of the evaluation visual content may also be determined based on other content, which is not limited in the present disclosure. For example, in some embodiments, the model updating system 120 may determine the quality level of the evaluation visual content based on a similarity score between the evaluation visual content and label visual content corresponding to the evaluation prompt information. The similarity score may be determined based on a specific algorithm or using a specific scoring model, for example. It is to be understood that a higher similarity score indicates a higher quality level.

It is to be understood that only several factors that may be used to evaluate the content quality are provided here. These factors may be used alone or in any combination to determine the quality level of the evaluation visual content. In actual applications, factors in other aspects may also be selected to evaluate the content quality.

At a block 330, the model updating system 120 may determine that the guidance scale currently used by the teacher model 130 is inappropriate in response to determining that the quality level of the evaluation visual content is lower than the first threshold quality, and then update the guidance scale based on the predetermined scaling factor. At a block 340, the model updating system 120 may determine that the guidance scale currently used by the teacher model 130 is appropriate in response to determining that the quality level of the evaluation visual content is not lower than the first threshold quality, and maintain the current guidance scale unchanged.

In summary, according to the embodiments of the present disclosure, the guidance scale of the teacher model introduced with CFG may be dynamically adjusted during the updating process of the student model, to adjust the influence of the negative prompt information on the visual content output from the teacher model. This may avoid the problem that the quality of the visual content output from the teacher model declines as the number of iterations increases. The quality of the model output of the teacher model may be ensured, which helps improve the updating effect of the student model.

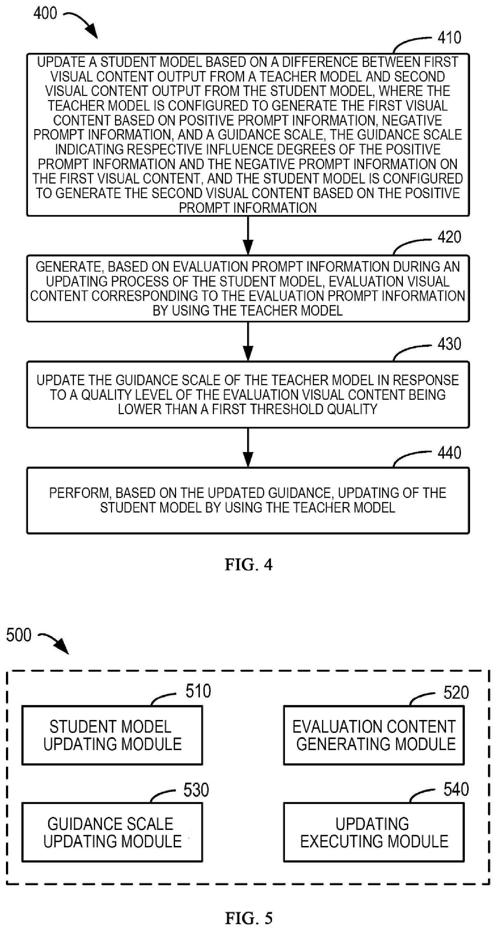

FIG. 4 illustrates a flowchart of a method 400 for model updating according to some embodiments of the present disclosure. The method 400 may be implemented at the electronic device 110 in FIG. 1. The method 400 will be described with reference to the environment 100 in FIG. 1.

At a block 410, the electronic device 110 updates a student model based on a difference between first visual content output from a teacher model and second visual content output from the student model, where the teacher model is configured to generate the first visual content based on positive prompt information, negative prompt information, and a guidance scale, the guidance scale indicating respective influence degrees of the positive prompt information and the negative prompt information on the first visual content, and the student model is configured to generate the second visual content based on the positive prompt information.

At a block 420, the electronic device 110 generates, based on evaluation prompt information during an updating process of the student model, evaluation visual content corresponding to the evaluation prompt information by using the teacher model.

At a block 430, the electronic device 110 updates the guidance scale of the teacher model in response to a quality level of the evaluation visual content being lower than a first threshold quality.

At a block 440, the electronic device 110 performs, based on the updated guidance scale , updating of the student model by using the teacher model.

In some embodiments, an influence degree of the negative prompt information indicated by the updated guidance scale on the visual content output from the teacher model is lower than an influence degree of the negative prompt information indicated by the guidance scale before the updating on the visual content output from the teacher model.

In some embodiments, the quality level is determined based on at least one of: a saturation score of the evaluation visual content, a content diversity score of the evaluation visual content, a content generation efficiency score of the evaluation visual content, a fineness score of the evaluation visual content, a similarity score between the evaluation visual content and label visual content corresponding to the evaluation prompt information, or an aesthetic quality score of the evaluation visual content.

In some embodiments, updating the guidance scale of the teacher model includes: updating, based on a predetermined scaling factor, the guidance scale to obtain a first guidance scale; and selecting, based on a comparison between the first guidance scale and a predetermined guidance scale, the updated guidance scale from the first guidance scale and the predetermined guidance scale.

In some embodiments, a training goal of the student model is determined based on the predetermined guidance scale.

In some embodiments, generating, based on evaluation prompt information during the updating process of the student model, the evaluation visual content corresponding to the evaluation prompt information by using the teacher model includes: generating, during the updating process of the student model and in response to an evaluation condition for the guidance scale being satisfied, the evaluation visual content based on the evaluation prompt information by using the teacher model.

In some embodiments, the evaluation condition indicates at least one of: the number of times the student model is updated reaching a predetermined interval for the number of times, or content quality of visual content output from the updated student model reaching a second threshold quality.

In some embodiments, the method 400 further includes: stopping, in response to a model updating goal being fulfilled, the updating of the student model, where the model updating goal is based on at least one of: the number of times the student model is updated reaching a predetermined number of times, or content quality of visual content output by the updated student model reaching a third threshold quality.

The embodiments of the present disclosure further provide a corresponding apparatus for implementing the above method or process. FIG. 5 illustrates an illustrative structural block diagram of an apparatus 500 for model updating according to some embodiments of the present disclosure. The apparatus 500 may be implemented as or included in the electronic device 110. Each module/component in the apparatus 500 may be implemented by hardware, software, firmware, or any combination thereof.

As shown in FIG. 5, the apparatus 500 includes a student model updating module 510 configured to update a student model based on a difference between first visual content output from a teacher model and second visual content output from the student model, where the teacher model is configured to generate the first visual content based on positive prompt information, negative prompt information, and a guidance scale, the guidance scale indicating respective influence degrees of the positive prompt information and the negative prompt information on the first visual content, and the student model is configured to generate the second visual content based on the positive prompt information. The apparatus 500 further includes an evaluation content generating module 520 configured to generate, based on evaluation prompt information during an updating process of the student model, evaluation visual content corresponding to the evaluation prompt information by using the teacher model. The apparatus 500 further includes a guidance scale updating module 530 configured to update the guidance scale of the teacher model in response to a quality level of the evaluation visual content being lower than a first threshold quality. The apparatus 500 further includes an updating executing module 540 configured to perform, based on the updated guidance scale, updating of the student model by using the teacher model.

In some embodiments, an influence degree of the negative prompt information indicated by the updated guidance scale on the visual content output from the teacher model is lower than an influence degree of the negative prompt information indicated by the guidance scale before the updating on the visual content output from the teacher model.

In some embodiments, the quality level is determined based on at least one of: a saturation score of the evaluation visual content, a content diversity score of the evaluation visual content, a content generation efficiency score of the evaluation visual content, a fineness score of the evaluation visual content, a similarity score between the evaluation visual content and label visual content corresponding to the evaluation prompt information, or an aesthetic quality score of the evaluation visual content.

In some embodiments, the guidance scale updating module 530 is further configured to: update, based on a predetermined scaling factor, the guidance scale to obtain a first guidance scale; and select, based on a comparison between the first guidance scale and a predetermined guidance scale, the updated guidance scale from the first guidance scale and the predetermined guidance scale.

In some embodiments, a training goal of the student model is determined based on the predetermined guidance scale.

In some embodiments, the evaluation content generation module 520 is further configured to: generate, during the updating process of the student model and in response to an evaluation condition for the guidance scale being satisfied, the evaluation visual content based on the evaluation prompt information by using the teacher model.

In some embodiments, the evaluation condition indicates at least one of: the number of times the student model is updated reaching a predetermined interval for the number of times, or content quality of visual content output from the updated student model reaching a second threshold quality.

In some embodiments, the apparatus 500 further includes: a stopping module configured to stop, in response to a model updating goal being fulfilled, updating of the student model , where the model updating goal is based on at least one of: the number of times the student model is updated reaching a predetermined number of times, or content quality of visual content output by the updated student model reaching a third threshold quality.

The units and/or modules included in the apparatus 500 may be implemented in various ways, including software, hardware, firmware, or any combination thereof. In some embodiments, one or more units and/or modules may be implemented using software and/or firmware, for example machine-executable instructions stored on a storage medium. In addition to machine-executable instructions or as an alternative, some or all units and/or modules in the apparatus 500 may be implemented at least partially by one or more hardware logic components. As an example, rather than a limitation, example types of hardware logic components that may be used include field programmable gate array (FPGA), application specific integrated circuit (ASIC), application specific standard (ASSP), system on chip (SOC), complex programmable logic device (CPLD), and more.

It is to be understood that one or more steps in the above method may be performed by a suitable electronic device or a combination of electronic devices. Such an electronic device or a combination of electronic devices may include, for example, the electronic device 110 in FIG. 1.

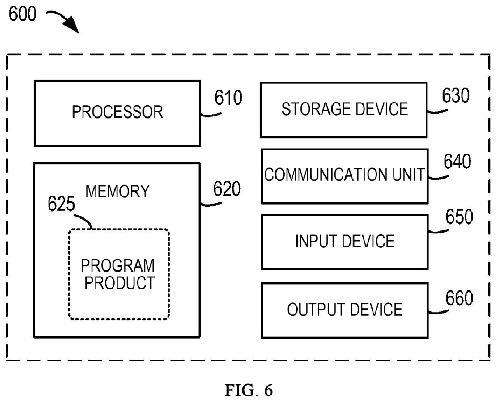

FIG. 6 illustrates a block diagram of an electronic device 600 in which one or more embodiments of the present disclosure may be implemented. It is to be understood that the electronic device 600 shown in FIG. 6 is only illustrative and is not to constitute any limitation on the function and scope of the embodiments described herein. The electronic device 600 shown in FIG. 6 may be used to implement the electronic device 110 in FIG. 1 or the apparatus 500 in FIG. 5.

As shown in FIG. 6, the electronic device 600 is in the form of a general-purpose electronic device. Components of the electronic device 600 may include, but are not limited to, one or more processing units or processors 610, a memory 620, a storage device 630, one or more communication units 640, one or more input devices 650, and one or more output devices 660. The processor 610 may be an actual or virtual processor, and may perform various processing based on a program stored in the memory 620. In a multi-processor system, multiple processors execute computer-executable instructions in parallel to improve the parallel processing capability of the electronic device 600.

The electronic device 600 typically includes multiple computer storage medium. Such medium may be any available medium accessible by the electronic device 600, including but not limited to volatile and non-volatile medium, removable and non-removable medium. The memory 620 may be volatile memory (for example, a register, cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine-readable medium such as a flash drive, a disk, or any other medium, which may be used to store information and/or data and may be accessed within the electronic device 600.

The electronic device 600 may further include additional removable/non-removable, volatile/non-volatile memory medium. Although not shown in FIG. 6, a disk driver for reading from or writing to a removable, non-volatile disk (such as a "floppy disk"), and an optical disk driver for reading from or writing to a removable, non-volatile optical disk may be provided. In these cases, each driver may be connected to a bus (not shown) by one or more data medium interfaces. The memory 620 may include a computer program product 625 having one or more program modules configured to perform various methods or acts of the various embodiments of the present disclosure.

The communication unit 640 implements communication with other electronic devices through a communication medium. In addition, the functions of the components of the electronic device 600 may be implemented by a single computing cluster or multiple computing machines, which may communicate through communication connections. Therefore, the electronic device 600 may use a logical connection with one or more other servers, a network personal computer (PC), or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may further communicate with one or more external devices (not shown) as needed through the communication unit 640, the external devices being such as a storage device, a display device, etc., communicate with one or more devices that enable the user to interact with the electronic device 600, or communicate with any devices (such as a network card, a modem, etc.) that enable the electronic device 600 to communicate with one or more other electronic devices. Such communication may be performed via input/output (I/O) interfaces (not shown).

According to an illustrative implementation of the present disclosure, there is provided a computer-readable storage medium having computer-executable instructions stored thereon, where the computer-executable instructions are executed by a processor to implement the method described above. According to an illustrative implementation of the present disclosure, there is further provided a computer program product tangibly stored on a non-transitory computer-readable medium and including computer-executable instructions, which are executed by a processor to implement the method described above.

Various aspects of the present disclosure are described herein with reference to flowcharts and/or block diagrams of methods, apparatuses, devices and computer program products implemented according to the present disclosure. It is to be understood that each block of the flowchart and/or block diagram, and combinations of blocks in the flowchart and/or block diagram may be implemented by computer-readable program instructions.

These computer-readable program instructions may be provided to a processor of a general-purpose computer, a special-purpose computer, or other programmable data processing apparatus to produce a machine, such that when the instructions are executed by the processor of the computer or other programmable data processing apparatus, an apparatus for implementing functions/actions specified in one or more blocks in the flowchart and/or block diagram is produced. These computer-readable program instructions may also be stored in a computer-readable storage medium, these instructions enable the computer, the programmable data processing apparatus, and/or other devices to work in a specific way, and thus, the computer-readable medium storing the instructions includes a manufactured product including instructions for implementing various aspects of the functions/actions specified in one or more blocks in the flowchart and/or block diagram.

The computer-readable program instructions may be loaded onto a computer, another programmable data processing apparatus, or other devices, so that a series of operations and steps are performed on the computer, the other programmable data processing apparatus, or the other devices to generate a computer-implemented process, thereby enabling the instructions executed on the computer, the other programmable data processing apparatus, or the other devices to implement the functions/actions specified in one or more blocks in the flowchart and/or block diagram.

The flowchart and block diagrams in the figures show the possibly implemented architectures, functions, and operations of the system, the method and the computer program product according to multiple implementations of the present disclosure. In this regard, each block in the flowchart or block diagram may represent a module, a program segment, or a portion of instructions, and the module, the program segment, or the portion of instructions which contains one or more executable instructions for implementing the specified logical functions. In some updated implementations, functions marked in the blocks may also occur in an order different from that marked in the figures. For example, two consecutive blocks may actually be performed substantially in parallel, or they may sometimes be performed in the reverse order, depending on the functions involved. It is to also be noted that each block in the block diagram and/or the flowchart, and a combination of the blocks in the block diagram and/or the flowchart may be implemented by a special-purpose hardware-based system that executes specified functions or actions, or may be implemented by a combination of special-purpose hardware and computer instructions.

The implementations of the present disclosure have been described above, and the above description is illustrative, non-exhaustive, and not limited to the disclosed implementations. Without departing from the scope of the described implementations, many modifications and changes will be apparent to those of ordinary skill in the art. The terms used herein are chosen to best explain the principles of the implementations, the practical applications or improvements to the technologies in the market, or to enable other ordinary skilled artisans in the art to understand the implementations disclosed herein.

## Claims

1. A method (400) for model updating, comprising:
updating (410) a student model based on a difference between first visual content output from a teacher model and second visual content output from the student model, wherein the teacher model is configured to generate the first visual content based on positive prompt information, negative prompt information, and a guidance scale, the guidance scale indicating respective influence degrees of the positive prompt information and the negative prompt information on the first visual content, and the student model is configured to generate the second visual content based on the positive prompt information;
generating (420), based on evaluation prompt information during an updating process of the student model, evaluation visual content corresponding to the evaluation prompt information by using the teacher model;
updating (430) the guidance scale of the teacher model in response to a quality level of the evaluation visual content being lower than a first threshold quality; and
performing (440), based on the updated guidance scale, updating of the student model by using the teacher model.

2. The method of claim 1, wherein an influence degree of the negative prompt information indicated by the updated guidance scale on the visual content output from the teacher model is lower than an influence degree of the negative prompt information indicated by the guidance scale before the updating on the visual content output from the teacher model.

3. The method of claim 1 or 2, wherein the quality level is determined based on at least one of:
a saturation score of the evaluation visual content,
a content diversity score of the evaluation visual content,
a content generation efficiency score of the evaluation visual content,
a fineness score of the evaluation visual content,
a similarity score between the evaluation visual content and label visual content corresponding to the evaluation prompt information, or
an aesthetic quality score of the evaluation visual content.

4. The method of any of claims 1 to 3, wherein updating the guidance scale of the teacher model comprises:
updating, based on a predetermined scaling factor, the guidance scale to obtain a first guidance scale; and
selecting, based on a comparison between the first guidance scale and a predetermined guidance scale, the updated guidance scale from the first guidance scale and the predetermined guidance scale.

5. The method of claim 4, wherein a training goal of the student model is determined based on the predetermined guidance scale.

6. The method of any of claims 1 to 5, wherein generating, based on evaluation prompt information during the updating process of the student model, the evaluation visual content corresponding to the evaluation prompt information by using the teacher model comprises:
generating, during the updating process of the student model and in response to an evaluation condition for the guidance scale being satisfied, the evaluation visual content based on the evaluation prompt information by using the teacher model.

7. The method of claim 6, wherein the evaluation condition indicates at least one of:
the number of times the student model is updated reaching a predetermined interval for the number of times, or
content quality of visual content output from the updated student model reaching a second threshold quality.

8. The method of any of claims 1 to 7, further comprising:
stopping, in response to a model updating goal being fulfilled, the updating of the student model, wherein the model updating goal is based on at least one of: the number of times the student model is updated reaching a predetermined number of times, or content quality of visual content output by the updated student model reaching a third threshold quality.

9. An apparatus (500) for model updating, comprising:
a student model updating module (510) configured to update a student model based on a difference between first visual content output from a teacher model and second visual content output from the student model, wherein the teacher model is configured to generate the first visual content based on positive prompt information, negative prompt information, and a guidance scale, the guidance scale indicating respective influence degrees of the positive prompt information and the negative prompt information on the first visual content, and the student model is configured to generate the second visual content based on the positive prompt information;
an evaluation content generating module (520) configured to generate, based on evaluation prompt information during an updating process of the student model, evaluation visual content corresponding to the evaluation prompt information by using the teacher model;
a guidance scale updating module (530) configured to update the guidance scale of the teacher model, in response to a quality level of the evaluation visual content being lower than a first threshold quality; and
an updating executing module (540) configured to perform, based on the updated guidance scale, updating of the student model by using the teacher model.

10. An electronic device (600), comprising:
at least one processor (610); and
at least one memory (620) coupled to the at least one processor (610) and storing instructions executable by the at least one processor (610), the instructions, when executed by the at least one processor (610), causing the electronic device (600) to perform the method of any of claims 1 to 8.

11. A computer-readable storage medium having stored thereon computer-executable instructions which are executable by a processor to implement the method of any of claims 1 to 8.

12. A computer program product comprising computer-executable instructions which, when executed by a processor, implement the method of any of claims 1 to 8.
